(19) Europäisches Patentamt
European Patent Office
Office européen des brevets

(11) **EP 3 351 600 B1**

(12) **EUROPEAN PATENT SPECIFICATION**

(45) Date of publication and mention
of the grant of the patent:
**08.11.2023 Bulletin 2023/45**

(51) International Patent Classification (IPC):
**C09D 7/40** (2018.01)      **C09D 5/08** (2006.01)
**C23F 11/10** (2006.01)

(21) Application number: **17208594.6**

(22) Date of filing: **19.12.2017**

(52) Cooperative Patent Classification (CPC):
**C09D 5/08; C09D 7/40; C23F 11/10**

(54) **SUSTAINABLE ADDITIVES FOR ANTI-CORROSION COATINGS FOR SUBSTRATES**

NACHHALTIGE ADDITIVE FÜR KORROSIONSSCHUTZBESCHICHTUNGEN FÜR SUBSTRATE

ADDITIFS DURABLES POUR REVÊTEMENTS ANTICORROSION DESTINÉS À DES SUBSTRATS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2017 US 201715410140**

(43) Date of publication of application:
**25.07.2018 Bulletin 2018/30**

(73) Proprietors:
• **The Boeing Company**
  **Arlington, VA 22202 (US)**
• **Universidade Federal De Minas Gerais - UFMG**
  **CEP-31270-901 Belo Horizonte, MG (BR)**

(72) Inventors:
• **KINLEN, Patrick John**
  **Chicago, Illinois 60606-1596 (US)**
• **SCHUETTE, Waynie Mark**
  **Chicago, Illinois 60606-1596 (US)**
• **PIMENTA, Lucia Pinheiro Santos**
  **CEP 31270-901 Belo Horizonte (BR)**
• **PARRISH, Catherine Jane**
  **Chicago, Illinois 60606-1596 (US)**

(74) Representative: **Harris, Jennifer Lucy**
  **Kilburn & Strode LLP**
  **Lacon London**
  **84 Theobalds Road**
  **London WC1X 8NL (GB)**

(56) References cited:
EP-A1- 2 939 657      CN-A- 105 385 413
JP-A- 2004 352 680      JP-A- 2006 233 322

• **M LEBRINI ET AL: "Inhibition Effect of Alkaloids Extract from Annona Squamosa Plant on the Corrosion of C38 Steel in Normal Hydrochloric Acid Medium", INT. J. ELECTROCHEM. SCI. INTERNATIONAL JOURNAL, vol. 5, 1 January 2010 (2010-01-01), pages 1698-1712, XP055471066,**
• **MANAWWER ALAM ET AL: "Vegetable oil based eco-friendly coating materials: A review article", ARABIAN JOURNAL OF CHEMISTRY, vol. 7, no. 4, 31 December 2013 (2013-12-31), pages 469-479, XP055204092, ISSN: 1878-5352, DOI: 10.1016/j.arabjc.2013.12.023**
• **J DUBEY ET AL: "Corrosion Inhibitive Effects of Withania Somnifera (A medicinal plant) on Aluminium in HCl Solution", RESEARCH JOURNAL OF RECENT SCIENCES, vol. 1, no. 73, 1 January 2012 (2012-01-01), pages 2277-2502, XP055251237, ISSN: 2277-2502**
• **ROESLER ET AL: "Antioxidant activity of Annona crassiflora: Characterization of major components by electrospray ionization mass spectrometry", FOOD CHEMISTRY, ELSEVIER LTD, NL, vol. 104, no. 3, 1 January 2007 (2007-01-01), pages 1048-1054, XP022086221, ISSN: 0308-8146, DOI: 10.1016/J.FOODCHEM.2007.01.017**

**Description**

**TECHNOLOGICAL FIELD**

The present disclosure generally relates to the field of corrosion inhibitors for use with aluminum, aluminum alloys copper and copper alloys. More particularly, the present disclosure relates to anti-corrosion compositions and methods for making anti-corrosion compositions that do not contain hexavalent chromium.

**BACKGROUND**

Presently, industry continues to respond to strong regulatory needs to eliminate the use of compounds thought to be environmentally toxic and carcinogenic. Representative compounds include hexavalent chromium used in connection with corrosion inhibiting formulations. As a result, there exists a need to identify chromium substitute formulations that possess adequate or superior corrosion inhibition relative to the disfavored chromium formulations.

The list of potential replacement compounds for the chromium-containing compounds that could be viable compounds that exhibit a predetermined degree of corrosion inhibition is large. However, identifying viable corrosion inhibition candidates requires significant testing and a commensurate amount of experimentation and capital to conduct such testing.

An anti-corrosion coating alternative that approximates or exceeds the corrosion resistance of anti-corrosion coatings that contain hexavalent chromium, along with methods for making the same, would be advantageous.

JP2006233322 has a Japanese language abstract which, according to an English language machine translation, states "to provide a rust preventive which is safe to the human body even when blended with cosmetics, foods, etc., and has a rust preventing effect higher than the conventional product. SOLUTION: This rust preventive containing, as an effective component, an extract of at least one plant selected from the group consisting of plants of the genus Bidens, represented by Bidens pilosa, and plants of the genus Aloe, such as Aloe arborescens and Aloe vera, has a high rust preventing effect. By using the rust preventive, rusting can be prevented over a long period of time without losing the luster of metal products".

M LEBRINI ET AL, "Inhibition Effect of Alkaloids Extract from Annona Squamosa Plant on the Corrosion of C38 Steel in Normal Hydrochloric Acid Medium", INT. J. ELECTROCHEM. SCI. INTERNATIONAL JOURNAL, (20100101), vol. 5, pages 1698 - 1712 has an abstract, which states "in this work, an alkaloids extract from Annona squamosa plant have been studied as possible corrosion inhibitor for C38 steel in molar hydrochloric acid (1 M HCl). Potentiodynamic polarization and AC impedance methods have been used. The corrosion inhibition efficiency increases on increasing plant extract concentration. Polarisation studies showed that Annona squamosa extract was mixed-type inhibitor in 1 M HCl. The inhibition efficiency of Annona squamosa extract was temperature dependent and its addition led to an increase of the activation corrosion energy revealing a physical adsorption between the extract and the metal surface. The adsorption of the Annona squamosa extract followed Langmuir's adsorption isotherm. The inhibitive effect of Annona squamosa is ascribed to the presence of organic compounds in the extract. The examined extract is considered as non-cytotoxic substance".

CN105385413 has a Chinese language abstract which, according to an English language machine translation, states "the invention discloses a sanding paste for an impeller of a centrifugal pump, and relates to the technical field of casting of centrifugal pumps. The sanding paste is prepared from the following raw materials by weight: 60 to 70 parts of quartz sand, 15 to 20 parts of nanometer aluminum oxide, 13 to 17 parts of modified montmorillonite, 10 to 15 parts of fly ash, 10 to 15 parts of palm oil, 10 to 15 parts of maltodextrin, 8 to 13 parts of an ethylene-vinyl acetate copolymer, 7 to 11 parts of rice bran wax, 5 to 9 parts of polymerized rosin, 4 to 7 parts of sorbitol, 15 to 20 parts of reed straw, 10 to 15 parts of rosemary, 8 to 13 parts of matricaria chamomilla, 50 to 60 parts of ethanol and 40 to 50 parts of glycerol. The sanding paste provided by the invention is homogeneous and transparent, can improve the sanding efficiency and sanding effect, and can fully guarantee dimensional accuracy of the impeller of the centrifugal pump; meanwhile, extracts of the reed straw, the rosemary and the matricaria chamomilla enable the sanding paste to be guaranteed in sanding effect and to have the effect of preventing the impeller from corrosion and rusting".

MANAWWER ALAM ET AL, "Vegetable oil based eco-friendly coating materials: A review article", ARABIAN JOURNAL OF CHEMISTRY, (20131231), vol. 7, no. 4, pages 469 - 479 has an abstract, which states "vegetable oils (VO) constitute the single, largest, easily available, low cost, non-toxic, non-depletable, biodegradable family yielding materials that are capable of competing with fossil fuel derived petro-based products. The outstanding feature of VO is their unique chemical structure with to unsaturation sites, epoxies, hydroxyls, esters and other functional groups along with inherent fluidity characteristics. These enable them to undergo various chemical transformations producing low molecular weight polymeric materials with versatile applications, particularly as chief ingredients in paints and coatings. In this manuscript, we have briefly described important VO derived materials such as alkyds, polyesteramides, polyetheramides, polyurethanes, epoxies, polyols, along with their preparation and applications as protective coatings. A small portion of the review is also dedicated to the future perspectives in the field. In spite of their extensive utilization in the world of coatings, literature survey revealed that in the past (from 1990s to date) no review has come up describing the chemistry and applications of VO polymer based coating materials".

J DUBEY ET AL, "Corrosion Inhibitive Effects of Withania Somnifera (A medicinal plant) on Aluminium in HCl Solution", RESEARCH JOURNAL OF RECENT SCIENCES, (20120101), vol. 1, no. 73, pages 2277 - 2502 has an abstract, which states "corrosion can be considered either chemical or electrochemical in nature. It decays the metallic properties of metals and lead them unfit for their specific purpose in industry. Corrosion of metals may be prevented by either barrier protection or sacrificial protection or by alloying or by anti rust solution of ligands containing N, S, O, Se and P as hetero atoms. The naturally occurring plant products are eco-friendly, compatible, nonpolluting, less toxic, easily available, biodegradable and economic to be used as corrosion inhibitors. Extract of different parts of plant like seeds, leaves, stem can be used as inhibitor to reduce the corrosion rate of metal like aluminium in acidic media. Corrosion inhibitive effects of naturally occurring Withania Somnifera (Ashwagandha) have been studied in different concentrations of HCl for aluminium. Studies were carried out at two different temperatures of extract of leaves and root of the said plant. Leaves extract has been found more effective corrosion inhibitor at lower temperature. The maximum corrosion inhibition efficiency was found 99.28% for leaves extract at 303K".

JP2004352680 has a Japanese language abstract which, according to an English language machine translation, states "PROBLEM TO BE SOLVED: To provide a composition for the effective treatment of allergic diseases with little side action. SOLUTION: Allergic diseases such as pollinosis and atopic dermatitis are effectively treated without causing side action by using a composition containing an extract of a plant of the genus Bidens (excluding an extract of a mixture of a plant of the genus Bidens with a plant of the family Zingiberaceae)".

ROESLER, R.; CATHARINO, ET AL, "Antioxidant activity of Annona crassiflora: Characterization of major components by electrospray ionization mass spectrometry", FOOD CHEMISTRY, ELSEVIER LTD, NL, Vol. 104, no. 3, 1 January 2007 (2007-01-01), pages 1048-1054, XP022086221, ISSN: 0308-8146 has an abstract, which states "the polar components of *Annona crassiflora* pulp, peel and seeds ethanolic extracts were investigated by direct infusion electrospray ionization mass spectrometry (ESI-MS) both in the negative ion mode. Characteristic ESI mass spectra with many diagnostic ions were obtained for the extracts, serving for fast and reliable information. The technique provided information of component structures revealing the presence of important bioactive components widely reported as potent antioxidants such as ascorbic acid, caffeic acid, quinic acid, ferulic acid, xanthoxylin, rutin, caffeoyltartaric acid, caffeoyl glucose and [quercetin+hexose+pentose-HT] . This is the first report on the composition by ESI-MS of araticum peel and seed ethanolic extracts demonstrating excellent antioxidant activity".

EP2939657 has an abstract, which states "the present invention has an object to provide an external dermal composition for anti-ageing, which prevents or improves apparent skin problems such as wrinkles, fine wrinkles, blemishes, and saggings caused by increasing age or ageing; and maintains or improves the barrier function and the hyaluronic acid production in the skin. The object is solved by providing an external dermal composition for anti-ageing, which contains an aqueous medium as a base material and one or more ingredients selected from L-ascorbic acid, derivatives thereof, and their salts as an effective ingredient(s)".

## BRIEF SUMMARY

According to a first aspect, there is provided a method for inhibiting corrosion of a substrate according to claim 1. According to a second aspect, there is provided a use of a composition for inhibiting corrosion on a substrate according to claim 14.

The present disclosure contemplates a method for inhibiting corrosion of a substrate comprising applying a composition to a substrate, with the composition comprising an extract derived from a plant genus comprising: *Annona, Inga, Mangifera; Taraxacum; Bidens; Plantango; Chamomilla; Solidago,* and combinations thereof, and inhibiting corrosion of a substrate, with the substrate comprising a substrate surface.

In the step of applying a composition to a substrate, the composition may comprise an extract derived from a plant species comprising: *Annona crassiflora; Mangifera indica; Taraxacum officinale; Plantango major; Chamomilla recutita; Solidago chilensis;* and combinations thereof.

In the step of applying a composition to a substrate the composition may comprise an extract derived from a plant species comprising: *Annona crassiflora; Mangifera indica;* and combinations thereof.

In the step of applying a composition to a substrate the composition may comprise an extract derived from a plant species comprising *Annona crassiflora; Annona squamosa; Mangifera indica;* and combinations thereof, and with the extract present in the composition at a concentration ranging from about 5% to about 20%.

In the step of applying a composition to a substrate, the substrate may comprise aluminum, aluminum alloy, copper, copper alloy, and combinations thereof.

The substrate may comprise aluminum alloy 2024 T3 or aluminum alloy 7075.

The present disclosure contemplates an example composition for inhibiting corrosion on a substrate, with the composition comprising an extract derived from a plant genus comprising *Annona, Inga, Mangifera; Taraxacum; Bidens; Plantango; Chamomilla; Solidago;* and combinations thereof.

The composition may comprise an extract derived from a plant selected from a plant species comprising *Annona crassiflora; Mangifera indica; Taraxacum officinale; Plantango major.; Chamomilla recutita; Solidago chilensis;* and combinations thereof.

The composition may comprise an extract derived from a plant species comprising *Annona crassiflora; Mangifera indica L;* and combinations thereof.

The composition may comprise an extract derived from a plant selected from a plant species comprising *Annona crassiflora; Mangifera indica;* and combinations thereof, with the extract present in the composition at a concentration ranging from about 5% to about 20%.

The composition may comprise an extract derived from a plant genus that is extracted from plant seeds, plant pulp, plant peel, plant leaves, and combinations thereof.

The composition may further comprise a primer.

The composition may further comprise a primer comprising a polyurethane-containing compound.

The composition may comprise a plant extract described above is an additive incorporated in a coating formulation.

Also contemplated is an example coating for inhibiting corrosion, with the coating comprising an extract derived from a plant genus comprising: *Annona, Inga, Mangifera; Taraxacum; Bidens; Plantango; Chamomilla; Solidago;* and combinations thereof.

The coating may comprise an extract derived from a plant selected from a plant species comprising: *Annona crassiflora; Inga (sp.); Mangifera indica.; Annona squamosa; Taraxacum officinale; Bidens pilosa; Plantango major; Chamomilla recutita; Solidago chilensis;* and combinations thereof.

The coating may comprise a composition comprising an extract derived from a plant selected from the group comprising *Annona crassiflora; Annona squamosa; Mangifera indica; Bidens pilosa.;* and combinations thereof.

The coating may comprise a composition comprising an extract derived from a plant species *comprising Annona crassiflora; Annona squamosa; Mangifera indica; Bidens pilosa.;* and combinations thereof, with the extract present in the composition at a concentration ranging from about 5% to about 20%.

Also contemplated is an example substrate comprising a coating for inhibiting corrosion on the substrate, with the coating comprising an extract derived from a plant genus comprising: *Annona, Inga, Mangifera; Taraxacum; Bidens; Plantango; Chamomilla; Solidago;* and combinations thereof.

The substrate may comprise a coating comprising an extract derived from a plant species comprising: *Annona crassiflora; Inga (sp.); Mangifera indica; Annona squamosa; Taraxacum officinale; Bidens pilosa; Plantango major; Chamomilla recutita; Solidago chilensis;* and combinations thereof.

The substrate may comprise a coating comprising a composition having an extract derived from a plant species comprising *Annona crassiflora; Annona squamosa; Mangifera indica; Bidens pilosa.;* and combinations thereof, with the extract present in the composition at a concentration ranging from about 5% to about 20%.

The substrate may comprise aluminum, aluminum alloy, copper, copper alloy, and combinations thereof.

The substrate may comprise aluminum alloy 2024 T3, aluminum alloy 7075, and combinations thereof.

Also contemplated is an example object comprising a substrate having a coating, with the coating comprising an extract derived from a plant genus comprising: *Annona, Inga, Mangifera; Taraxacum; Bidens; Plantango; Chamomilla; Solidago;* and combinations thereof.

The object may comprise a substrate comprising a composition having an extract derived from a plant species comprising *Annona crassiflora; Annona squamosa; Mangifera indica; Bidens pilosa.;* and combinations thereof, with the extract present in the composition at a concentration ranging from about 5% to about 20%.

The object may comprise a stationary structure, or a mobile structure, with the mobile structure including, without limitation, a vehicle.

The vehicle may comprise a manned aircraft, an unmanned aircraft; a manned spacecraft; an unmanned spacecraft; a manned rotorcraft; an unmanned rotorcraft; a manned terrestrial vehicle; an unmanned terrestrial vehicle; a manned surface marine vehicle; an unmanned marine surface vehicle; a manned sub-surface marine vehicle; an unmanned sub-surface marine vehicle, and combinations thereof.

**BRIEF DESCRIPTION OF THE DRAWINGS**

Having thus described variations of the disclosure in general terms, reference will now be made to the accompanying drawings, which are not necessarily drawn to scale, and wherein:

FIG. 1 is a graph showing the current density (A/cm$^2$) plotted as a function of the potential applied (V) for control compound samples known to possess antioxidant behavior at a concentration of 1000 ppm;

FIG. 2 is a graph showing the polarization curves (anodic sweep) at -0.953 V during 5000 s for control compound samples known to possess antioxidant behavior at a concentration of 1000 ppm;

FIG. 3 is a graph showing the polarization curves (anodic sweep) at -0.60 V during 5000 s for control compound samples known to possess antioxidant behavior at a concentration of 1000 ppm;

FIG. 4 is a graph showing the polarization curves (anodic sweep) at -0.60 V during 5000s for tested plant extracts at a concentration of 1000 ppm against control compound samples known to possess antioxidant behavior.

FIG. 5 is a graph showing the current density (A/cm$^2$) plotted as a function of the potential applied (V) for control compound samples known to possess antioxidant behavior at a concentration of 1000 ppm and plant extracts at a concentration of 1000 ppm;

FIG. 6 is a graph showing a correlation plot for plant extract samples of such samples' % DPPH scavenging radical testing as a function of % Corrosion Inhibition Efficiency (%CIE); and

FIGs. 7-11 are flowcharts outlining aspects of the present disclosure.

## DETAILED DESCRIPTION

The present disclosure is directed to anti-corrosion compositions comprising particular plant extracts from plant genera and plant species that have now been determined to possess anti-corrosion properties and characteristics. Also contemplated are coatings for substrates comprising the anti-corrosion compositions, and aspects of the disclosure are directed to methods for inhibiting corrosion on substrate surfaces comprising applying the compositions and coatings to substrate surfaces, particularly aluminum, aluminum alloy, copper and copper alloy compositions.

It has now been determined that successful anti-corrosive coatings, also equivalently referred to herein as "corrosion inhibiting coatings", can be made by incorporating compounds, including extracted compounds (e.g. "extracts") from naturally occurring plant species that exhibit anti-oxidant characteristics. Many naturally occurring anti-oxidant compounds have been found to exist in, and have been extracted from various plant species. However, not every naturally occurring anti-oxidant compound candidate material will deliver adequate anti-corrosive properties to a coating formulation for the purpose of inhibiting corrosion on a particular substrate material. "Adequate anti-corrosive properties", means anti-corrosive properties that are about equivalent to or greater than anti-corrosive properties of a non-naturally-occurring anti-corrosion formulation, such as, for example hexavalent chromium-containing compounds.

Indeed, while many naturally occurring plant genera, and species within such genera, may display some degree of anti-oxidant characteristic, it has been determined that not all such genera and species will produce extracts that contribute a sufficient degree of anti-corrosion properties to an anti-corrosion formulation for the purpose of inhibiting corrosion including, without limitation, inhibiting corrosion on a substrate comprising aluminum or an aluminum alloy, copper or a copper alloy, etc. Therefore, significant labor-intensive trial and error effort can be expended to obtain a requisite effective amount of extract from a candidate plant genus or plant species for inclusion into an anti-corrosion formulation to protect a substrate in terms of protection from corrosion, only to discover that such anti-corrosion formulation produces a sub-standard degree of corrosion protection for substrate materials such as, for example, aluminum, aluminum alloys, copper, copper alloys etc.

According to the present disclosure, methods now have been discovered for predictively selecting plant extracts from plant genera and plant species that will provide predetermined and quantifiable anti-corrosive properties to an anti-corrosion formulation for the purpose of inhibiting corrosion of a substrate. Preferably, the substrate comprises aluminum, an aluminum alloy, copper, a copper alloy, etc.

DPPH (diphenylpiccrylhydrazyl) is a stable and commercially available organic nitrogen radical, and has a UV-visible absorption maximum at 517 nm. Upon reduction, the purple solution color of the DPPH solution fades, enabling the reaction to be monitored colorometrically by a spectrophotometer. The loss of the solution's starting purple color towards a yellowish color is an indication that the solution's antioxidant capacity (i.e. radical scavenging) has increased. The antioxidant capacity (i.e. radical scavenging) is therefore expressed as the inhibition percentage (%) of the DPPH. A spectrophotometer measures the absorptions of the DPPH solution of blanks/controls and with samples. The absorption value of the blank DPPH solution minus the tested solution (samples) will yield the amount of the radicals scavenged.

According to the present disclosure, selected plants were tested in a DPPH assay, and were then submitted for Linear Sweep Voltammetry and Chronoamperometry analyses. A collection of compounds possessing known characteristics were sampled as "controls" to produce reference points. For example, thiophenol, possessing a thiol group, was known to possess satisfactory corrosion inhibition and was used as a control in the electrochemical tests. According to the present disclosure, at a potential held at -0.6V, plant extract samples found to be useful as additives for corrosion inhibition formulations applied to substrate (and that were tested at concentrations ranging from 1 ppm to 1000 ppm) showed particularly good results at concentrations ranging from about 500 ppm to about 1000 ppm as compared with the thiophenol and other control reference points.

According to the present disclosure, plants, including plants that are found abundantly in nature that are thought to possess some degree of anti-oxidant capacity were identified and collected. More specifically, five (5) species from the Asteraceae family, three (3) from the Annonaceae family, one (1) from the Astropurpurea family, one (1) from the Eurphorbiaceae family were harvested, separated into leaves, branch, fruit, pulp, peel and seeds, and then submitted to an extraction process.

A further contemplated method of obtaining a plant extract contemplates extracting the plant extract sample by a method comprising: treating plant seeds, plant pulp, plant peel or combinations thereof to obtain a sample; adding a solvent to the sample; and precipitating a dried extract from the solvent. It is understood that the solvent is substantially removed from the sample. "Treating" a sample includes any chemical or physical processes that can be effected to reduce a natural plants form (e.g. seeds, leaf, peel, etc.) to a reduced form. Such "treatments include, without limitation, macerating, pulverizing, etc. It is further understood that macerating a sample refers to the process of softening or breaking down the sample, typically by the addition of a solvent.

Further extraction processes were conducted as follows. Aerial parts of *Bidens pilosa, Taraxacum officinale* and *Chamomilla recutida*, seeds and peel of *Annona crassiflora,* and leaves of *Mangifera indica* and *Solidago* were frozen in liquid nitrogen, pulverized and freeze-dried before extraction. The extracts were obtained by extracting the plant material with a polar organic solvent such as alcohol, methanol or ethanol, and ethanol mixed with water (otherwise referred to equivalently as ethanol 70%, and ethanol: water, 7:3 (v/v)). One (1.0 g) gram of plant material was extracted with three (3.0) mL of methanol under agitation for 20 minutes. The extraction was performed three times. The resultant combined liquid extract was evaporated under vacuum at 45° C. The extracts obtained were kept out of light under 4° C. For *Annona squamosa* peel, the best solvent extractor was a solution of ethanol/water (7:3), otherwise referred to as ethanol 70% v/v. One (1.0 g) gram of plant material was extracted with three (3.0) mL of ethanol 70% v/v under agitation for 20 minutes. The extraction was performed three times. The resultant combined liquid extract was evaporated under vacuum at 50° C. The water residual was frozen-dried and the extract was kept out of light under 4° C.

Thirty-seven (37) plant extracts from five (5) different plant species were conducted by performing a diphenylpicrylhydrazyl (DPPH) radical scavenging assay. Such DPPH assay is based on the ability of the assay to transfer an electron from an anti-oxidant-containing compound to an oxidant. Three plant samples presenting more than 60% of efficiency in DPPH radical scavenging were selected as potential antioxidant sources. In addition, thiophenol, 2,5-dimercapto-1,3,4-thiadiazole and 6-amino-2-mercaptobenzothiazole were also evaluated and established as controls in the DPPH radical scavenging assay, and showed 90.69%; 88.55% and 88.42% respectively of radical scavenging capacity. Alpha tocopherol (Vitamin E), ascorbic acid (Vitamin C) and gallic acid were also used as positive controls and showed 90.17%; 89.01% and 88.80% of radical scavenging, respectively.

It has now been determined that, correlating the results obtained for plant extract samples subjected to: 1) DPPH assays, and also 2) electrochemical techniques (Linear Sweep Voltammetry and Chronoamperometry analyses) to determine corrosion can accurately predict the efficacy of candidate materials as to their ability to impart anti-corrosive properties to an anti-corrosion formulation for use on substrate materials comprising aluminum, aluminum alloy, copper and copper alloy.

While the specific results obtained for samples subjected to: 1) DPPH radical scavenging assays, and also 2) electrochemical techniques (Linear Sweep Voltammetry and Chronoamperometry analyses) may vary, it has been determined that when a particular extract displays approximately a 1:1 (+/- 10%) correlation between the values, and the values are about 80.00 or higher, the plant extract possesses corrosion inhibition characteristics that can be implemented into a corrosion inhibition formulation for aluminum and aluminum alloy substrates to inhibit corrosion of substrates comprising aluminum, aluminum alloy, copper and copper alloy. Thus, the extracts referred to throughout the present disclosure may be characterized by having a DPPH radical scavenging assay value of at least 80 and a Corrosion Inhibition Efficiency Percentage of at least 80, with a correlation between the values of about 1:1 (+/- about 10%).

EXAMPLES 1-7

The compounds thiophenol, 2,5-dimercapto-1,3,4-thiadiazole and 6-amino-2-mercaptobenzothiazole having anticorrosive properties were used as controls. Additionally, alpha-tocopherol, ascorbic acid and gallic acid (Sigma-Aldrich) were used as standard compounds having known and recognized antioxidant activity.

DPPH Radical Scavenging Assay - The antioxidant test [Erkan, N., Cetin, H., and Ayranci, E. (2011). Antioxidant activities of Sideris congesta Davis et Huber-Morath and Soderitis arguta Boiss et Heldr: Identification of free flavonoids and cinnamic and derivates. Food Research International, 44, 297-303; Roesler, R., Catharino, R.R., Malta, L.G., Eberlin, M.N., & Pastore, G. (2007). Evaluation of the Antioxidant properties of the Brazilian cerrado fruit Annona crassiflora (Araticum). Food Chemistry, 104, 1048-1054] was conducted in Thermo Scientific Spectrophotometer (Multiskan GO processed by SkanIt Software 3.2.1.4RE). The assay was performed on 96-well microplates with six (6) different concentrations of each substance (1000, 500, 250, 125, 62.5 and 31.25 $\mu$g/mL). A DPPH methanol solution (250 $\mu$L) 0.004% (w/v) was added to a methanol solution of the compound to be tested (10 $\mu$L). Absorbance at 517 nm was determined after 30 mins. The control was prepared as above without any extract, and methanol was used for the baseline correction. Radical scavenging was expressed as the inhibition percentage and was calculated via the formula:

$$\% \text{ corrosion inhibition} = [(A_{DPPH} - A_{Ext})/A_{DPPH}] \times 0.100$$

wherein $A_{DPPH}$ is the absorbance value of a DPPH blank sample; $A_{Ext}$ is the absorbance value of the extract sample evaluated as the difference between the absorbance value of the extract sample and the absorbance value of a corresponding blank.

Rotating Disk Experiments - Linear Sweep Voltammetry (LSV) was conducted on a Pine Research Instrument using a rotating coper disk electrode rotator at 1000 rpm with a Series G-750 potentionstat, with a platinum counter electrode and glass Colonel Ag/AgCl reference electrode. Gamry Framework software was used. A copper disk (1 cm$^2$) working electrode (OD 10mm) was used with the electrode polished between readings. LSV was measured as an electrical potential scan was performed between -0.157V and -1.150V with a scan rate of 0.002V/s. Air was introduced via pump into the solution before the measurements. The current decay values were determined at -0.953V over 5000 seconds. It was observed that the current plateau was situated between -0.7 and -0.6V for the majority of the commercial (known) compounds. As the current plateau can be an indication of the inhibitor corrosion function, chronoamperometry experiments were run at a potential maintained at -0.6V. Solutions were prepared with phosphate buffered saline (PBS) buffer tablets (Sigma P4417). Purity of the 99%+ pure copper was verified using a Baird DV4 Arc/Spark optical emission spectrometer. Two different experiments were performed:

1. Measurement of current according to the potential applied in the range of -0.157V to - 1.150V;
2. Polarization curves (Anodic sweep) at -0.953V during 5000s and -0.6V, decay of current v. time.

The initial experiments were conducted at the following concentrations: 1000, 500, 100 and 10 ppm. The experiments with the potential held at -0.6V were performed at 1000 ppm. Before each set of experiments, a blank sample (100 mL of PBS) was performed.

The Corrosion Inhibition Efficiency Percentage (% CIE) was calculated using the following formula:

$$\% \text{ CIE} = [1 - i(w/inhibitor)(S)/ i(w/o inhibitor)(B) \times 100,$$

wherein % CIE is corrosion inhibition efficiency percentage; I (w/inhibitor)(S) is the current measured at 5000s for the extract sample in determined potential; I (w/o inhibitor)(B) is the current measured at 5000s for a corresponding blank sample, said blank sample comprising 100 mL of phosphate buffer solution.

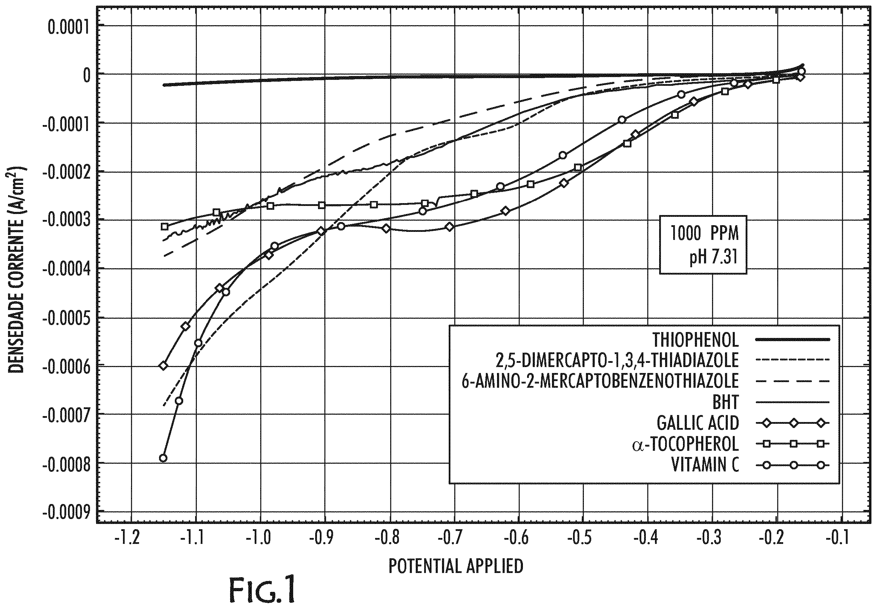

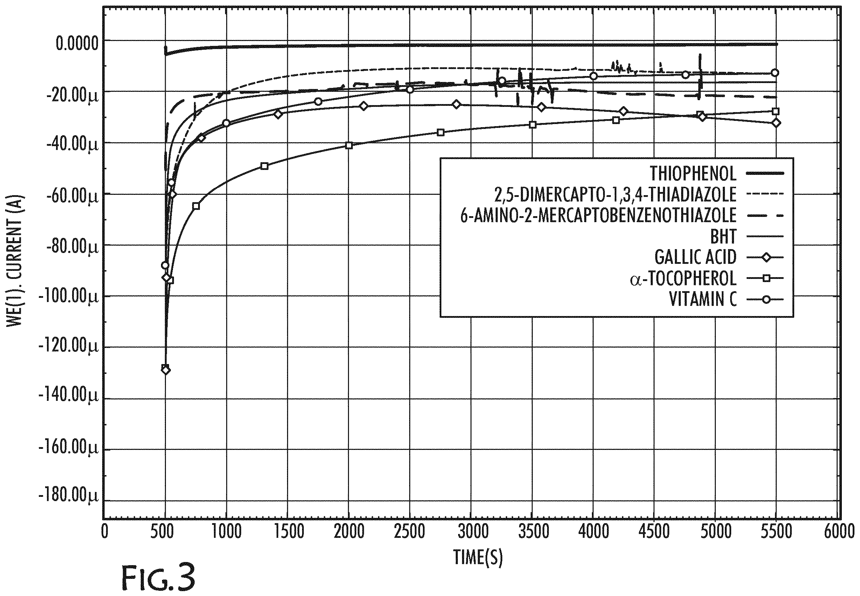

FIGs 1-3 show results of the evaluation of the above-identified control materials. Steady state chronoamperometry was used with the potentiostat maintained at -0.800V with the current measured over time. See FIG. 3. The procedure used was as follows. Calibrated and polished copper, aluminum and platinum disk working electrodes were provided having a dimension of 11.3 mm OD x 1.5 mm thick. A 150 mL beaker was clamped into place and filled with 5% NaCl solution with phosphate buffered saline (Sigma Aldrich - P4417-100TAB; 0.137M, 0.8% NaCl and 0.01M phosphate buffer, 0.0027M potassium chloride. The platinum wire reference electrode was rinsed with deionized water, wiped, and clamped to a side of the beaker. Potentiostat working electrode cables were connected to the rotating disk rotator, ensuring that electrodes were not touching one another in the beaker. The speed was adjusted to 1000 rpm and turned on. Blank electrolytes and solutions with known concentrations of corrosion inhibitors were run for verification.

In some instances, a copper rotating disk electrode may be employed. The copper rotating disk electrode enables an assay that observes oxygen reductions that are occurring. While being bound to no particular theory, it is believed that the use of a copper rotating disk electrode is important for determining anti-corrosion potential of a candidate material for use with aluminum and aluminum alloy substrates, because copper is a key element involved in the dynamics of aluminum corrosion. Prior analyses for anti-corrosion employed electrodes (e.g. steel electrodes) that would not discern the appropriate likelihood of anti-corrosiveness of compounds for use with aluminum and aluminum alloy substrates. For example, while potassium phosphate is known to prevent corrosion on aluminum components, the known assaying tests for % CIE would yield a negative result for potassium phosphate due to the use of a steel electrode.

Thiophenol and 6-amino-2-mercaptobenzothiazole were reported to provide corrosion inhibition in aluminum alloys (Vukmirovic, M. B., Vasiljevic, N., Dimitrov, N., Sieradzki, K. Diffusion-Limited current density of oxygen reduction on Copper. Journal of Electrochemical Society, 150, B-10-B15, 2003), and also DPPH scavenging activity at 1000 ppm (90.69% AND 88.42%, respectively). Further, 2,5-dimercapto-1,3,4-thiadiazole was known in the aluminum corrosion literature (showing poor performance for corrosion inhibition in immersion procedure - ASTM G31-72). However, 2,5-dimercapto-1,3,4-thiadiazole showed good DPPH radical scavenging activity at sample concentrations of 250, 500 and 1000 ppm (74.81%, 83% and 83.5%, respectively). Butylated hydroxytoluene (BHT) is known to be a powerful synthetic antioxidant. BHT showed good % of DPPH radical scavenging at 250, 500 and 1000 ppm (69%, 85% and 89%, respectively). Gallic acid, alpha-tocopherol and ascorbic acid were used as positive controls in the DPPH antioxidant test. See Table 1, Examples 1A-7B.

## TABLE 1

| Plant material | 500 | SD | %CV | 1000 | SD | %CV |
|---|---|---|---|---|---|---|
| *Annona crassiflora* seeds MeOH 100% - EXAMPLES 8A, 8B | 17.25 | - | - | 78.39 | - | - |
| *A. crassiflora* seeds EtOH 100% | - | - | - | - | - | - |
| *A. crassiflora* seeds EtOH/H2O 7:3 – EXAMPLES 9A, 9B | 19.20 | - | - | 40.75 | - | - |
| *A. crassiflora* seeds EtOH /H2O 1:1 - - EXAMPLES 10A, 10B | 33.40 | - | - | 54.85 | - | - |
| *Bidens pilosa* leaves MeOH 100% - EXAMPLES 11A, 11B | 70.60 | - | - | 85.05 | - | - |
| *Bidens pilosa* leaves EtOH 100% | - | - | - | - | - | - |
| *Bidens pilosa* leaves EtOH/H2O 7:3 – EXAMPLES 12A, 12B | 17.40 | - | - | 51.81 | - | - |
| *Bidens pilosa* leaves EtOH/H2O 1:1 – EXAMPLES 13A, 13B | 16.29 | - | - | 38.05 | - | - |
| *Taraxacum officinalle* MeOH 100% - EXAMPLES 14A, 14B | 14.98 | - | - | 30.45 | - | - |
| *Taraxacum officinalle* EtOH 100% | - | - | - | - | - | - |
| *Taraxacum officinalle* EtOH/H2O 7:3 – EXAMPLES 15A, 15B | -1.49 | - | - | 66.67 | - | - |
| *Taraxacum officinalle* EtOH/H2O 1:1 - EXAMPLES 16A, 16B | 27.32 | - | - | 42.41 | - | - |
| *Annona squamosa* seeds MeOH 100% - EXAMPLES 17A, 17B | 15.10 | - | - | 48.54 | - | - |
| *Annona squamosa* peel MeOH 100% - EXAMPLES 18A, 18B | 79.66 | 0.018 | 2.42 | 87.66 | 0.022 | 3.15 |
| *Annona squamosa* peel MeOH/H2O 7:3 – EXAMPLES 19A, 19B | 89.55 | 0.0091 | 1.55 | 88.41 | 0.0019 | 0.28 |
| *Annona squamosa* peel MeOH/H2O 1:1 – EXAMPLES 20A, 20B | 89.12 | 0.012 | 1.96 | 86.21 | 0.27 | 5.07 |
| *Annona squamosa* peel EtOH /H2O 1:1 – EXAMPLES 21A, 21B | 84.79 | 0.038 | 8.32 | 86.90 | 0.024 | 3.94 |
| *Annona squamosa* peel EtOH /H2O 7:3 – EXAMPLES 22A, 22B | 87.85 | 0.010 | 1.55 | 88.40 | 0.023 | 3.49 |
| *Annona crassiflora* peel MeOH 100% - Sample 1* 23A, 23B | 40.82 | 0.058 | 8.08 | 52.80 | 0.019 | 3.38 |
| *Annona crassiflora* peel EtOH 100% - Sample 1 – 24A, 24B | 32.40 | 0.026 | 3.17 | 51.65 | 0.083 | 14.1 |
| *Annona crassiflora* peel EtOH /H2O 7:3 - Sample 1 - 25A, 25B | 73.80 | 0.0039 | 36.90 | 91.73 | 0.118 | 3.95 |
| *Annona crassiflora* peel MeOH 100% - Sample 2** 26A, 26B | 57.91 | 0.006 | 1.78 | 82.76 | 0.043 | 31.1 |
| *Annona crassiflora* peel EtOH 100% - Sample 2 – 27A, 27B | 75.70 | 0.013 | 6.62 | 87.70 | 0.0028 | 2.78 |
| *Annona crassiflora* peel EtOH /H2O 7:3 - Sample 2 – 28A, 28B | 87.37 | 0.0071 | 9.45 | 88.01 | 0.0040 | 4.10 |
| *Annona crassiflora* peel MeOH 100% - Sample 3*** 29A, 29B | 85.88 | 0.019 | 16.85 | 87.64 | 0.0026 | 2.62 |
| *Annona crassiflora* peel EtOH 100% - Sample 3 – 30A, 30B | 46.39 | 0.029 | 6.82 | 77.78 | 0.058 | 32.7 |
| *Annona crassiflora* peel EtOH /H2O 7:3 - Sample 3 – 31A, 31B | 88.01 | 0.0040 | 4.19 | 88.54 | 0.0062 | 6.79 |
| *Annona crassiflora* peel MeOH 100% - Sample 4**** 32A, 32B | 38.15 | 0.0032 | 0.67 | 73.02 | 0.032 | 15.1 |
| *Annona crassiflora* peel EtOH 100% - Sample 4 - 33A, 33B | 87.47 | 0.0035 | 3.61 | 88.51 | 0.0037 | 4.17 |
| *Annona crassiflora* peel EtOH /H2O 7:3 - Sample 4 34A, 34B | 64.60 | 0.027 | 9.94 | 88.62 | 0.0022 | 2.45 |
| *Chamomilla recutita* MeOH 100% - EXAMPLES 35A, 35B | 19.68 | 0.033 | 5.12 | 37.99 | 0.0032 | 0.65 |
| *Solidago* MeOH 100% - EXAMPLES 36A, 36B | 5.44 | 0.012 | 1.58 | 24.89 | 0.012 | 2.13 |
| Thiophenol – EXAMPLES 1A, 1B | 89.40 | - | - | 90.69 | - | - |
| 2,5-dimercapto-1,3,4-thiadiazole – EXAMPLES 2A, 2B | 88.89 | - | - | 88.55 | - | - |
| 6-amino-2-mercaptobenzothiazole – EXAMPLES 3A, 3B | 88.69 | - | - | 88.42 | - | - |
| Ascorbic Acid (Vit. C) – EXAMPLES 4A, 4B | 91,40 | - | - | 92.40 | - | - |
| Alph- tocopherol (Vit. E) – EXAMPLES 5A, 5B | 91.08 | - | - | 90,96 | - | - |
| BHT – EXAMPLES 6A, 6B | 78.13 | 0.0176 | 10.735 | 87.17 | 0.0110 | 10.1 |
| Gallic Acid – EXAMPLES 7A, 7B | 90.42 | - | - | 90.72 | - | - |

EXAMPLES 8-39

Eight (8) species were harvested and submitted to an extraction process. Different solvents and solvent mixtures were evaluated, with methanol selected as the optimum solvent. Thirty-seven (37) plant extracts from five (5) different species of plants were conducted in the DPPH radical scavenging assay. The inhibition percentage (%) of the DPPH for samples tested (500 ppm and 1000ppm) is presented in the Table 1 above. Corrosion Inhibition Efficiency Percentage (% CIE) was then tested by subjecting the plant extract samples to Linear Sweep Voltammetry and chronoamperometry experiments, with the results of both %DPPH and %CIE for the plant samples and control samples presented in Table 2 below.

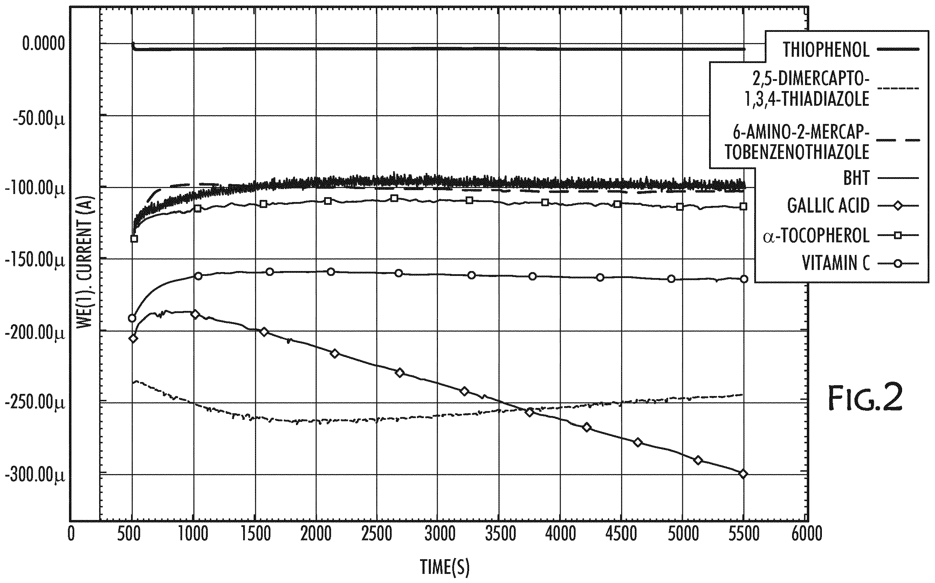

Thiophenol, 2,5-dimercapto-1,3,4-thiadiazole, 6-amino-2-mercaptobenzothiazole, alpha tocopherol (Vitamin E), butylated hydroxytoluene, ascorbic acid (Vitamin C) and gallic acid were evaluated as known corrosion inhibition controls in Linear Sweep Voltammetry and chronoamperometry experimentation. Current variation curves are presented in FIG. 1 showing the potential applied. Chronoamperometry experiments were conducted at a potential maintained at - 0.953 V, with results shown in FIG. 2. The current density ($A/cm^2$) plotted as a function of the potential applied (V) for the inhibitors at a concentration of 1000 ppm. The plotted results showed that no plateau existed at a potential of -0.953 V for the inhibitors tested, except for thiophenol.

The potential was changed and an anodic sweep curve was obtained with the potential maintained at -0.70 V (see FIG. 3). When it was observed that some compounds had a plateau closer to -0.60 V, new experiments were conducted at a potential maintained at -0.60 V.

Seeds, pulp and peels of *Annona crassiflora* and *Annona squamosa* fruits were separated, frozen and freeze dried. Seeds were pulverized using pre-cooled mortar and pestle under liquid nitrogen. The frozen powder was transferred to tubes and freeze-dried for two days. The weighed material was successively extracted by maceration with hexane and ethanol (70% v/v) under sonication for 20 minutes. Maceration is understood to be the process by which a solid is softened or separated into constituents by soaking in a liquid, such as, for example a solvent. The seeds/solvent rate was 1:3 (w/v). The solvent was removed under reduced pressure (700 mm Hg, vacuum pump)) using a rotoevaporator. The resultant hexane extract was obtained in the form of pale yellowish oil, yielding 31.5% dry weight. The ethanolic extract was obtained in the form a brown-colored syrup, yielding 14% of dry weight. Peels of *Annona crassiflora* and *Annona squamosa* fruit, after pulverization and freeze-drying, were extracted by maceration with ethanol 75% under sonication for 20 minutes. The peel/solvent rate was 1:3 (w/v). The solvent was removed under pressure (700 mm Hg, vacuum pump) using a rotoevaporator. The *resultant Annona crassiflora* peel extract was obtained in the form of a dark-colored syrup yielding 22.4% dry weight. The *resultant Annona squamosa* peel extract was obtained in the form of a dark colored syrup yielding 20.2% dry weight.

Leaves of *Inga sp.* were pulverized using pre-cooled pestle and mortar under liquid nitrogen, the frozen powder was transferred to tubes and freeze-dried for two days. The weighed material was extracted with methanol (MeOH) under sonication for 20 minutes. After the solvent removal under reduced pressure, the leaf methanolic extract was obtained. The leaf extracts were maintained under dark refrigeration at 4°C.

The extracts obtained were screened on DPPH Radical Scavenger assays. The extracts obtained were screened on DPPH Radical Scavenger assays. The antioxidant test (Erkan, Cetin., & Ayranci. 2011; Roesler, Catharino, Malta, Eberlin, & Pastore, 2007) was carried out on 96-well microplates with five different concentrations of each substance (500, 250, 125, 62.5 and 31.25 μg/mL). A DPPH MeOH solution (250 μL) 0.004% (w/v) was added to a MeOH solution of the compound to be tested (10 μL). Absorbance at 492 nm was determined after 30 min. The control was prepared as above without any extract, and methanol was used for the baseline correction. Radical scavenging was expressed as the inhibition percentage and was calculated using the following formula

$$\% \text{ Inhibition} = [\ (A_{DPPH} - A_{ext})\ /\ A_{DPPH}\ ].100$$

where ADPPH is the absorbance value of the DPPH' blank sample and AExt is the absorbance value of the test solution. AExt was evaluated as the difference between the absorbance value of the test solution and the absorbance value of its blank. The % IC values are reported in final concentration of 500 μg/mL of dried extracts and isolated compounds.

It would be understood by those skilled in the field that the accepted "shorthand" listing of various plant species acceptably lists the genus in abbreviated fashion, such that, for example, A. *crassiflora* is an equivalent term for *Annona crassiflora,* etc. Further EtOH is an equivalent chemical "shorthand" for ethanol, and MeOH is an equivalent "shorthand" for methanol. Extracts in an amount of 10g each were obtained from five (5) plants as follows:

1 - *Annona crassiflora* - Seed extract
2 - *Annona crassiflora* - Peel extract

3 - *Inga spp* - Leaf extract

4 - *Mangifera indica* - Leaf extract

5 - *Annona squamosa* - Peel extract

CONTROL EXAMPLES 1A and 1B

| Extract Type | Conc. (ppm) | (% CIE) |
|---|---|---|
| 1A. Thiophenol | 500 | 89.40 |
| 1B. Thiophenol | 1000 | 90.69 |

CONTROL EXAMPLES 2A and 2B

| Extract Type | Conc. (ppm) | (% CIE) |
|---|---|---|
| 2A. 2,5-dimercapto-1,3,4-thiadiazole | 500 | 88.89 |
| 2B. 2,5-dimercapto-1,3,4-thiadiazole | 1000 | 88.55 |

CONTROL EXAMPLES 3A and 3B

| Extract Type | Conc. (ppm) | (% CIE) |
|---|---|---|
| 3A. 6-amino-2-mercaptobenzothiazole | 500 | 88.69 |
| 3B. 6-amino-2-mercaptobenzothiazole | 1000 | 88.42 |

CONTROL EXAMPLES 4A and 4B

| Extract Type | Conc. (ppm) | (% CIE) |
|---|---|---|
| 4A. ascorbic acid (Vitamin C) | 500 | 91.40 |
| 4B. ascorbic acid (Vitamin C) | 1000 | 92.40 |

CONTROL EXAMPLES 5A and 5B

| Extract Type | Conc. (ppm) | (% CIE) |
|---|---|---|
| 5A. alpha tocopherol (Vitamin E) | 500 | 91.08 |
| 5B. alpha tocopherol (Vitamin E) | 1000 | 90.96 |

CONTROL EXAMPLES 6A and 6B

| Extract Type | Conc. (ppm) | (% CIE) |
|---|---|---|
| 6A. butylated hydroxytoluene (BHT) | 500 | 78.13 |
| 6B. butylated hydroxytoluene (BHT) | 1000 | 87.17 |

CONTROL EXAMPLES 7A and 7B

| Extract Type | Conc. (ppm) | (% CIE) |
|---|---|---|
| 7A. gallic acid | 500 | 90.42 |
| 7B. gallic acid | 1000 | 90.72 |

EXAMPLES 8A and 8B

| Extract Type | Conc. (ppm) | Solvent | (% CIE) |
|---|---|---|---|
| 8A. *Annona crassiflora* (Seeds) | 500 | MeOH 100% | 17.25 |
| 8B. *Annona crassiflora* (Seeds) | 1000 | MeOH 100% | 78.39 |

EXAMPLES 9A and 9B

| Extract Type | Conc. (ppm) | Solvent | (% CIE) |
|---|---|---|---|
| 9A. *Annona crassiflora* (Seeds) | 500 | EtOH/H$_2$0 (7:3) | 19.20 |
| 9B *Annona crassiflora* (Seeds) | 1000 | EtOH/H$_2$0 (7:3) | 40.75 |

EXAMPLES 10A and 10B

| Extract Type | Conc. (ppm) | Solvent | (% CIE) |
|---|---|---|---|
| 10A. *Annona crassiflora* (Seeds) | 500 | EtOH/H$_2$0 (1:1) | 33.40 |
| 10B. *Annona crassiflora* (Seeds) | 1000 | EtOH/H$_2$0 (1:1) | 54.85 |

EXAMPLES 11A and 11B

| Extract Type | Conc. (ppm) | Solvent | (% CIE) |
|---|---|---|---|
| 11A. *Bidens pilosa* (Leaves) | 500 | MeOH 100% | 70.60 |
| 11B. *Bidens pilosa* (Leaves) | 1000 | MeOH 100% | 85.05 |

EXAMPLES 12A and 12B

| Extract Type | Conc. (ppm) | Solvent | (% CIE) |
|---|---|---|---|
| 12A. *Bidens pilosa* (Leaves) | 500 | EtOH/H$_2$0 (7:3) | 17.40 |
| 12B. *Bidens pilosa* (Leaves) | 1000 | EtOH/H$_2$0 (7:3) | 51.81 |

EXAMPLES 13A and 13B

| Extract Type | Conc. (ppm) | Solvent | (% CIE) |
|---|---|---|---|
| 13A. *Bidens pilosa* (Leaves) | 500 | EtOH/$H_2$0 (1:1) | 16.29 |
| 13B. *Bidens pilosa* (Leaves) | 1000 | EtOH/$H_2$0 (1:1) | 38.05 |

EXAMPLES 14A and 14B

| Extract Type | Conc. (ppm) | Solvent | (% CIE) |
|---|---|---|---|
| 14A. *Taraxacum officianalle* | 500 | MeOH 100% | 14.98 |
| 14B. *Taraxacum officianalle* | 1000 | MeOH 100% | 30.45 |

EXAMPLES 15A and 15B

| Extract Type | Conc. (ppm) | Solvent | (% CIE) |
|---|---|---|---|
| 15A. *Taraxacum officianalle* | 500 | EtOH/$H_2$0 (7:3) | -1.49 |
| 15B. *Taraxacum officianalle* | 1000 | EtOH/$H_2$0 (7:3) | 66.67 |

EXAMPLES 16A and 16B

| Extract Type | Conc. (ppm) | Solvent | (% CIE) |
|---|---|---|---|
| 16A. *Taraxacum officianalle* | 500 | EtOH/$H_2$0 (1:1) | 27.32 |
| 16B. *Taraxacum officianalle* | 1000 | EtOH/$H_2$0 (1:1) | 42.41 |

EXAMPLES 17A and 17B

| Extract Type | Conc. (ppm) | Solvent | (% CIE) |
|---|---|---|---|
| 17A. *Annona squamosa* (Seeds) | 500 | MeOH 100% | 15.10 |
| 17B. *Annona squamosal* (Seeds) | 1000 | MeOH 100% | 48.54 |

EXAMPLES 18A and 18B

| Extract Type | Conc. (ppm) | Solvent | (% CIE) |
|---|---|---|---|
| 18A. *Annona squamosa* (Peel) | 500 | MeOH 100% | 79.66 |
| 18B. *Annona squamosa* (Peel) | 1000 | MeOH 100% | 87.66 |

EXAMPLES 19A and 19B

| Extract Type | Conc. (ppm) | Solvent | (% CIE) |
|---|---|---|---|
| 19A. *Annona squamosa* (Peel) | 500 | MeOH/$H_2$0 (7:3) | 89.55 |
| 19B. *Annona squamosa* (Peel) | 1000 | MeOH/$H_2$0 (7:3) | 88.41 |

EXAMPLES 20A and 20B

| Extract Type | Conc. (ppm) | Solvent | (% CIE) |
|---|---|---|---|
| 20A. *Annona squamosa* (Peel) | 500 | MeOH/H$_2$0 (1:1) | 89.12 |
| 20B. *Annona squamosa* (Peel) | 1000 | MeOH/H$_2$0 (1:1) | 86.21 |

EXAMPLES 21A and 21B

| Extract Type | Conc. (ppm) | Solvent | (% CIE) |
|---|---|---|---|
| 21A. *Annona squamosa* (Peel) | 500 | EtOH/H$_2$0 (1:1) | 84.79 |
| 21B. *Annona squamosa* (Peel) | 1000 | EtOH/H$_2$0 (1:1) | 86.90 |

EXAMPLES 22A and 22B

| Extract Type | Conc. (ppm) | Solvent | (% CIE) |
|---|---|---|---|
| 22A. *Annona squamosa* (Peel) | 500 | EtOH/H$_2$0 (7:3) | 87.85 |
| 22B. *Annona squamosa* (Peel) | 1000 | EtOH/H$_2$0 (7:3) | 88.40 |

EXAMPLES 23A and 23B

| Extract Type | Conc. (ppm) | Solvent | (% CIE) |
|---|---|---|---|
| 23A. *Annona crassiflora* (Peel) | 500 | MeOH 100% | 40.82 |
| 23B. *Annona Crassiflora* (Peel) | 1000 | MeOH 100% | 52.80 |

EXAMPLES 24A and 24B

| Extract Type | Conc. (ppm) | Solvent | (% CIE) |
|---|---|---|---|
| 24A. *Annona crassiflora* (Peel) | 500 | EtOH 100% | 32.40 |
| 24B. *Annona crassiflora* (Peel) | 1000 | EtOH 100% | 51.65 |

EXAMPLES 25A and 25B

| Extract Type | Conc. (ppm) | Solvent | (% CIE) |
|---|---|---|---|
| 25A. *Annona crassiflora* (Peel) | 500 | EtOH/H$_2$0 (7:3) | 73.80 |
| 25B. *Annona crassiflora* (Peel) | 1000 | EtOH/H$_2$0 (7:3) | 91.73 |

EXAMPLES 26A and 26B

| Extract Type | Conc. (ppm) | Solvent | (% CIE) |
|---|---|---|---|
| 26A. *Annona crassiflora* (Peel) | 500 | MeOH 100% | 57.91 |
| 26B. *Annona crassiflora* (Peel) | 1000 | MeOH 100% | 82.76 |

EXAMPLES 27A and 27B

| Extract Type | Conc. (ppm) | Solvent | (% CIE) |
|---|---|---|---|
| 27A. *Annona crassiflora* (Peel) | 500 | EtOH 100% | 75.70 |
| 27B. *Annona crassiflora* (Peel) | 1000 | EtOH 100% | 87.70 |

EXAMPLES 28A and 28B

| Extract Type | Conc. (ppm) | Solvent | (% CIE) |
|---|---|---|---|
| 28A. *Annona crassiflora* (Peel) | 500 | EtOH/$H_2$0 (7:3) | 87.37 |
| 28B. *Annona crassiflora* (Peel) | 1000 | EtOH/$H_2$0 (7:3) | 88.01 |

EXAMPLES 29A and 29B

| Extract Type | Conc. (ppm) | Solvent | (% CIE) |
|---|---|---|---|
| 29A. *Annona crassiflora* (Peel) | 500 | MeOH 100% | 85.88 |
| 29B. *Annona crassiflora* (Peel) | 1000 | MeOH 100% | 87.64 |

EXAMPLES 30A and 30B

| Extract Type | Conc. (ppm) | Solvent | (% CIE) |
|---|---|---|---|
| 30A. *Annona crassiflora* (Peel) | 500 | EtOH 100% | 46.39 |
| 30B. *Annona crassiflora* (Peel) | 1000 | EtOH 100% | 77.78 |

EXAMPLES 31A and 31B

| Extract Type | Conc. (ppm) | Solvent | (% CIE) |
|---|---|---|---|
| 31A. *Annona crassiflora* (Peel) | 500 | EtOH/$H_2$0 (7:3) | 88.01 |
| 31B. *Annona crassiflora* (Peel) | 1000 | EtOH/$H_2$0 (7:3) | 88.54 |

EXAMPLES 32A and 32B

| Extract Type | Conc. (ppm) | Solvent | (% CIE) |
|---|---|---|---|
| 32A. *Annona crassiflora* (Peel) | 500 | MeOH 100% | 38.15 |

(continued)

| Extract Type | Conc. (ppm) | Solvent | (% CIE) |
|---|---|---|---|
| 32B. *Annona crassiflora* (Peel) | 1000 | MeOH 100% | 73.02 |

EXAMPLES 33A and 33B

| Extract Type | Conc. (ppm) | Solvent | (% CIE) |
|---|---|---|---|
| 33A. *Annona crassiflora* (Peel) | 500 | EtOH 100% | 87.47 |
| 33B. *Annona crassiflora* (Peel) | 1000 | EtOH 100% | 88.51 |

EXAMPLES 34A and 34B

| Extract Type | Conc. (ppm) | Solvent | (% CIE) |
|---|---|---|---|
| 34A. *Annona crassiflora* (Peel) | 500 | EtOH/H$_2$0 (7:3) | 64.60 |
| 34B. *Annona crassiflora* (Peel) | 1000 | EtOH/H$_2$0 (7:3) | 88.62 |

EXAMPLES 35A and 35B

| Extract Type | Conc. (ppm) | Solvent | (% CIE) |
|---|---|---|---|
| 35A. *Chamomilla recutita* | 500 | MeOH 100% | 19.68 |
| 35B. *Chamomilla recutita* | 1000 | MeOh 100% | 37.99 |

EXAMPLES 36A and 36B

| Extract Type | Conc. (ppm) | Solvent | (% CIE) |
|---|---|---|---|
| 36A. *Solidago* | 500 | MeOH 100% | 5.44 |
| 36B. *Solidago* | 1000 | MeOh 100% | 24.89 |

The following three (3) plant extracts showed good DPPH radical scavenging activity at 1000 ppm (with "good" DPPH assay understood to be DPPH radical scavenging assay activity >85%): *Bidens pilosa*, *Annona crassiflora*, and *Annona squamosa*. *Bidens pilosa* leaves and branches extracted with methanol and the methanolic extract at 1000 ppm showed an antioxidant activity of 85.05%. The fruit from *Annona crassiflora* was separated into seeds, pulp and peels and extracted with methanol and showed the antioxidant activity presented in Tables 1 and 2.

The results of the best-performing plant extracts in terms of: 1) high % DPPH Radical Scavenging test results (greater than about 80%); and 2) high % CIE percentage are listed below in Table 2, along with the performance of the various control compounds (for comparison) known to possess a requisite level of corrosion inhibition [thiophenol, 2,5-dimercapto-1,3,4-thiadiazole, 6-amino-2-mercaptobenzothiazole, alpha tocopherol (Vitamin E), butylated hydroxytoluene (BHT), ascorbic acid (Vitamin C), and gallic acid].

**TABLE 2**

| Samples tested | % DPPH radical scavenging | %CIE |
|---|---|---|
| Thiophenol | 90.69 | 99.14 |
| 2,5-dimercapto-1,3,4-thiadiazole | 88.55 | 91.91 |
| 6-amino-2-mercaptobenzothiazole | 88.42 | 85.98 |
| Alpha-tocopherol (vit. E) | 90.17 | 83.00 |
| Ascorbic acid (vit C) | 89.01 | 91.92 |
| Gallic acid | 88.80 | 79.92 |
| BHT | 87.16 | 90.02 |
| *Bidens pilosa* 1000ppm | 85.05 | 85.92 |
| *A. crassiflora Seeds* 1000ppm | 78.39 | 91.11 |
| *A. squamosa's peel* (ethanol/water) 1000ppm | 88.41 | 97.86 |
| *A. crassiflora's* peel MeOH 100% (1000ppm) | 82,76 | 98,19 |
| Solidago MeOH 100% | 24.89 | 50.20 |
| *Chamomilla recutita* MeOH 100% | 37.99 | 43.90 |
| *Taraxacum officinale* | 30.45 | 31.70 |
| *A. crassiflora* seeds 1ppm | 2.96 | 11.90 |
| *A. crassiflora* seeds 10ppm | 3.63 | 15.95 |
| *A. crassiflora* seeds 100ppm | 10.39 | 27.62 |
| *A. crassiflora* seeds 500ppm | 40.43 | 31.70 |
| *A. crassiflora* peel 100ppm | 20.02 | 29.61 |
| *A. crassiflora* peel 500ppm | 54.90 | 46.84 |
| *A. crassiflora* peel 1000ppm | 89.22 | 51.63 |
| *Bidens pilosa* 1ppm | 0.02 | 4.27 |
| *Bidens pilosa* 10ppm | 0.21 | 3.39 |
| *Bidens pilosa* 100ppm | 2.21 | 3.42 |
| *Bidens pilosa* 500ppm | 11.05 | 8.39 |
| Vanlube 500ppm | 89.91 | 84.02 |
| Vanlube 1000ppm | 90.00 | 86.05 |

As shown in Table 2, plant extract samples of *Bidens pilosa, A. squamosa* peel, and *A. crassiflora* peel at a concentration of 1000 ppm all generated % DPPH values and % CIE values exceeding 80%.

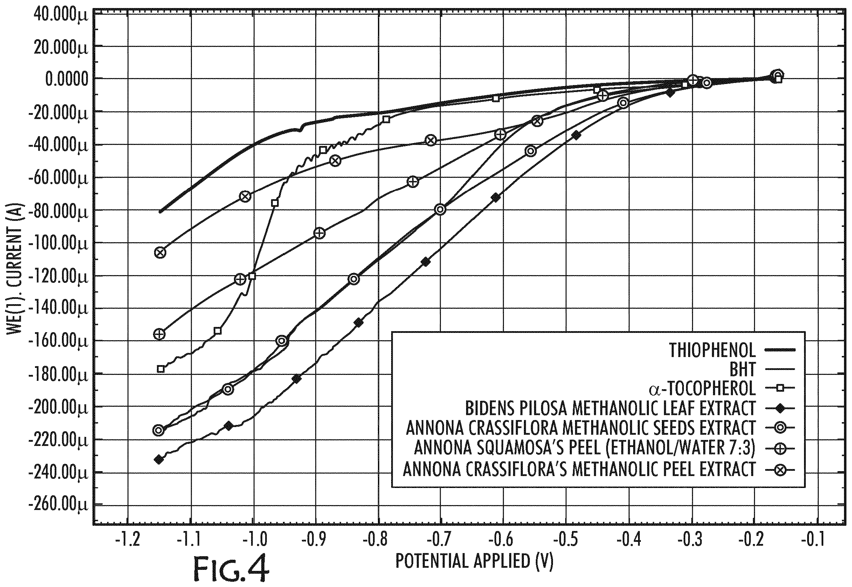

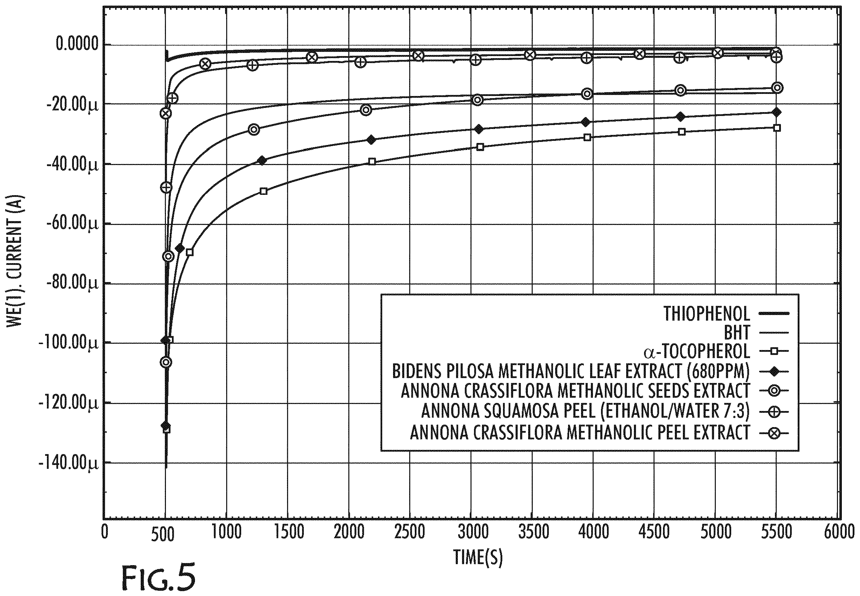

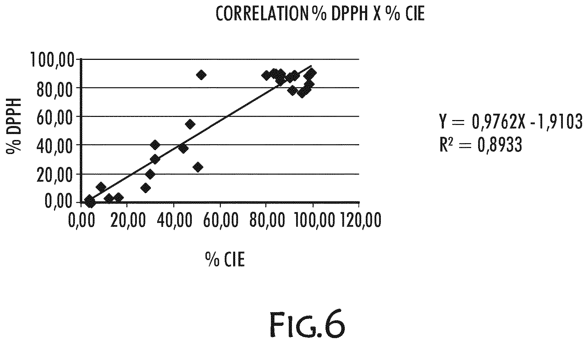

FIG. 4 is a graph showing the polarization curves (anodic sweep) at -0.60 V during 5000s for tested plant extracts at a concentration of 1000 ppm against control compound samples known to possess antioxidant behavior. FIG. 5 is a graph showing the current density (A/cm$^2$) plotted as a function of the potential applied (V) for control compound samples known to possess antioxidant behavior at a concentration of 1000 ppm and plant extracts at a concentration of 1000 ppm. FIG. 6 is a graph showing a correlation plot for plant extract samples' % DPPH scavenging radical testing as a function of % Corrosion Inhibition Efficiency (% CIE).

The extract samples shown below in Table 3 were dissolved in methanol at concentrations of 5% and 20% and then incorporated into a primer formulation as follows: 8 parts Duxone DXPU polyurethane; 1 part Duxone DX700 catalyzer. Duxone DX 700 solvent thinner was also added. (Duxone products are made by DuPont). Solids were removed via filtration on sieves. A primer comprising a sol-gel (Desogel EAP-9 (Gol Airlines)) was used to coat aluminum 2024 T3 panels. The panels were then coated with the extract formulations by painting. For reference, a formulation of Vanlube 829 (RT Vanderbilt Co.) at a concentration of 20% was also prepared. Aluminum 2024 T3 panels were coated with the Vanlube 829 by painting. The panels were then prepared for scratch testing according to ASTM D7091-13. After salt spray testing (ASTM B117) for 336 hours, the Aluminum panels coated with the extract/primer formulation samples containing *Annona crassiflora* peal extract and *Mangifera indica* leaf extract appeared visually and after scanning electron microscopy (SEM) to have protected the panels from corrosion to an extent substantially similarly to the panels coated with the Vanlube 829. Extract samples of *Mangifera indica* were obtained via the methods and protocols set forth herein used to obtain the other plant extract samples. The test results for the 5% Salt Spray Testing of panels conditioned via scratch test ASTM 1654 are shown below in Table 3. Each of the extracts tested and reported in Table 3 above represented more than 85% of corrosion inhibition efficiency.

### TABLE 3

| Salt Spray Corrosion Test Matrix and Results | | | | |
|---|---|---|---|---|
| Inhibitor | Concentration % | 96-hr Ranking | 336-hr Ranking | 1000-hr Ranking |
| *Annona crassiflora - Seed Extract* | 20 | 2 | 1 | 3 |
| *Annona crassiflora - Peel Extract* | 5 | 8 | 7 | 7 |
| | 20 | 7 | 6 | 5 |
| *Inga sp - Leaf Extract* | 5 | 5 | 5 | 9 |
| | 20 | 11 | 12 | 12 |
| *Mangifera indica* | 5 | 12 | 11 | 10 |
| | 20 | 4 | 4 | 11 |
| *Annona squamosal - Peel Extract* | 5 | 9 | 8 | 6 |
| | 20 | 10 | 10 | 8 |
| *Vanlube 829* | 20 | 1 | 2 | 1 |

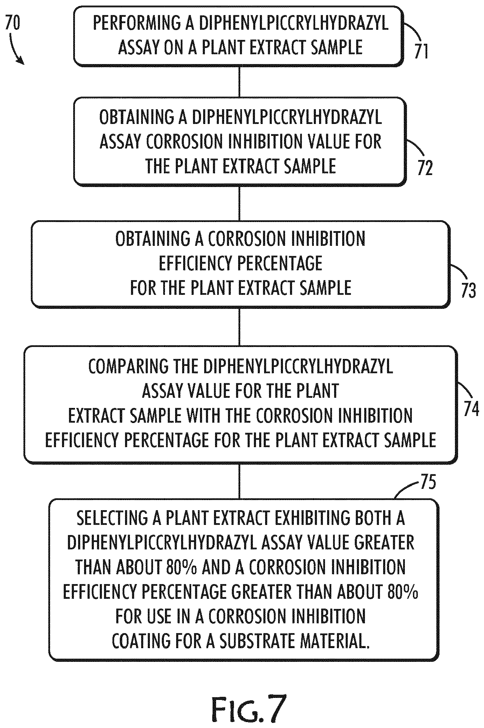

FIGs. 7-10 are flowcharts outlining contemplated methods of the present disclosure. FIG. 7 outlines a predictive method 70 for selecting a plant extract having a requisite level of corrosion inhibition for aluminum and aluminum alloys comprising performing a diphenylpiccrylhydrazyl (DPPH) radical scavenging assay on a plant extract sample 71, obtaining a diphenylpiccrylhydrazyl (DPPH) radical scavenging assay corrosion inhibition value for the plant extract sample 72, obtaining a corrosion inhibition efficiency percentage for the plant extract sample 73, comparing the diphenylpiccrylhydrazyl (DPPH) radical scavenging assay value for the plant extract sample with the corrosion inhibition efficiency percentage for the plant extract sample 74, and selecting a plant extract exhibiting both a diphenylpiccrylhydrazyl (DPPH) radical scavenging assay value greater than about 80% and a corrosion inhibition efficiency percentage greater than about 80% for use in a corrosion inhibition coating for a substrate material 75.

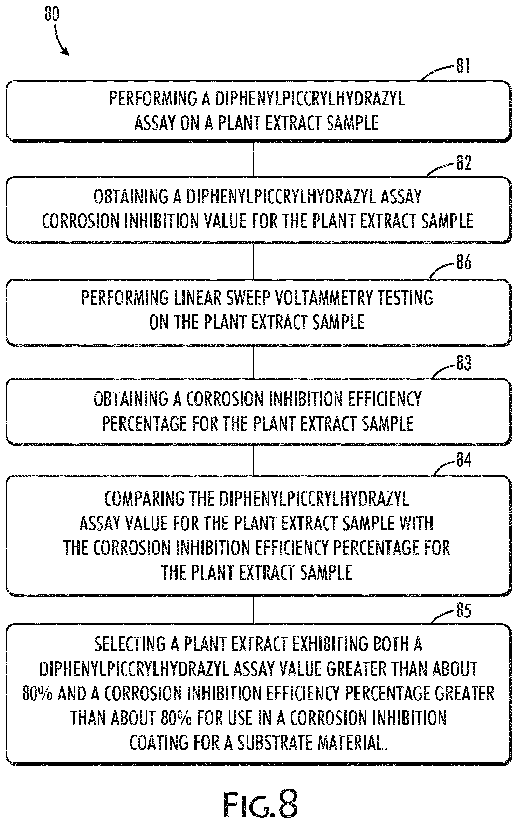

FIG. 8 outlines a predictive method 80 for selecting a plant extract having a requisite level of corrosion inhibition for aluminum and aluminum alloys comprising performing a diphenylpiccrylhydrazyl (DPPH) radical scavenging assay on a plant extract sample 81, obtaining a diphenylpiccrylhydrazyl (DPPH) radical scavenging assay corrosion inhibition value for the plant extract sample 82, performing a linear sweep voltammetry testing on the plant extract sample; 86, obtaining a corrosion inhibition efficiency percentage for each of the plurality of plant extract samples 83, comparing the diphenylpiccrylhydrazyl (DPPH) radical scavenging assay value for the plant extract sample with the corrosion inhibition efficiency percentage for the plant extract sample 84, and selecting a plant extract exhibiting a diphenylpiccrylhydrazyl (DPPH) radical scavenging assay value greater than about 80% and a corrosion inhibition efficiency percentage greater than about 80% for use in a corrosion inhibition coating 85. The aspects shown in FIG. 7 are able to be incorporated into the methods shown in FIG. 8.

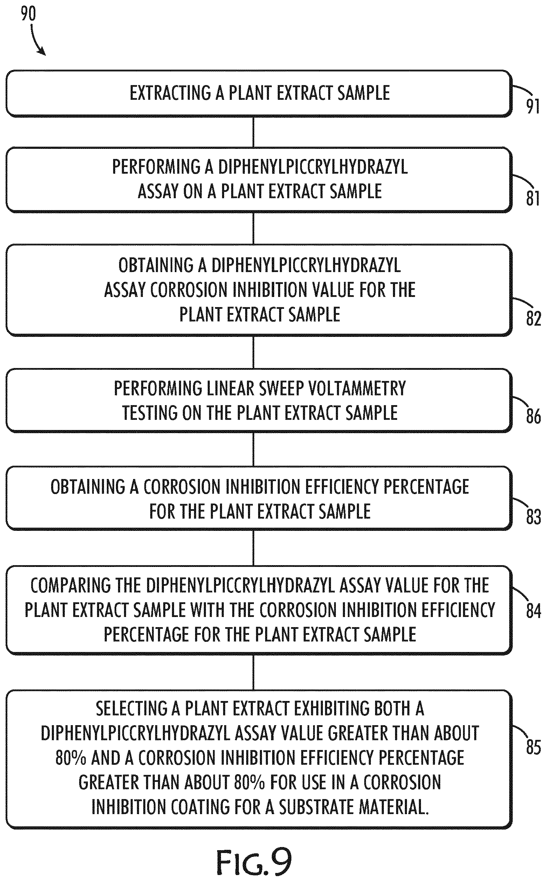

FIG. 9 outlines a predictive method 90 for selecting a plant extract having a requisite level of corrosion inhibition for aluminum and aluminum alloys comprising extracting a plurality of plant extract samples 91, performing a diphenylpiccrylhydrazyl (DPPH) radical scavenging assay on a plant extract sample 81, obtaining a diphenylpiccrylhydrazyl (DPPH) radical scavenging assay corrosion inhibition value for the plant extract sample 82; performing a linear sweep voltammetry testing on the plant extract sample 86, obtaining a corrosion inhibition efficiency percentage for the plant extract samples 83, comparing the diphenylpiccrylhydrazyl (DPPH) radical scavenging assay value for the plant extract sample with the corrosion inhibition efficiency percentage for the plant extract sample 84, and selecting a plant extract exhibiting both a diphenylpiccrylhydrazyl (DPPH) radical scavenging assay value greater than about 80% and a corrosion inhibition efficiency percentage greater than about 80% for use in a corrosion inhibition coating 85. The aspects shown in FIGs. 97-8 are able to be incorporated into the methods shown in FIG. 9.

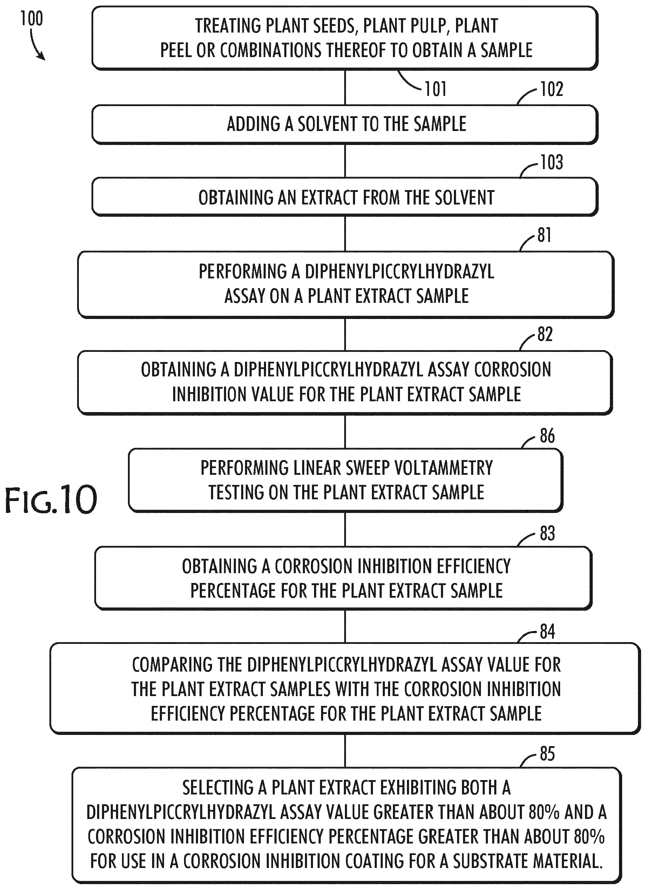

FIG. 10 outlines a method 100 for predictively selecting a plant extract having a requisite level of corrosion inhibition for aluminum and aluminum alloys comprising: treating a sample of plant seeds, plant pulp, plant peel or combinations thereof to obtain a sample 101, adding a solvent to the sample 102, obtaining an extract from the solvent 103, performing a diphenylpiccrylhydrazyl (DPPH) assay on a plant extract sample 81, obtaining a diphenylpiccrylhydrazyl (DPPH) assay corrosion inhibition value for the plant extract samples 82, performing a linear sweep voltammetry testing on the plurality of plant extract samples 86; obtaining a corrosion inhibition efficiency percentage for the plant extract samples 83, comparing the diphenylpiccrylhydrazyl (DPPH) assay value for the plant extract sample with the corrosion inhibition efficiency percentage for the plant extract sample 84, and selecting a plant extract exhibiting both a diphenylpiccrylhydrazyl (DPPH) assay value greater than about 80% and a corrosion inhibition efficiency percentage greater than about 80% for use in a corrosion inhibition coating 85. The aspects shown in FIG. 7-9 are able to be incorporated into the methods shown in FIG. 10.

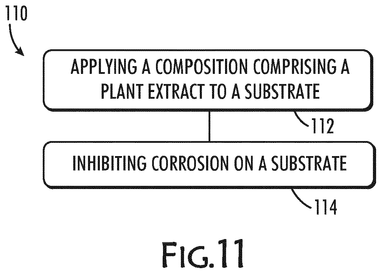

FIG. 11 is a flowchart showing an aspect of the present disclosure whereby a method for inhibiting corrosion 110 is presented comprising applying a composition comprising a plant extract to a substrate 112 and inhibiting corrosion of the substrate 114.

Variations and alternatives of the present disclosure relate to the manufacture and coating of various aluminum, aluminum alloy, copper and copper alloy substrates including, without limitation various components and parts such as, for example, component and parts of any dimension, including the manufacture and use of components and parts used in the fabrication of larger parts and structures. Such components and parts include, but are not limited to, components and parts designed to be positioned on the exterior or interior of stationary objects including, without limitation, bridge trusses, support columns, general construction objects, buildings, etc. Further components and parts include, without limitation, components and parts used in the manufacture of non-stationary objects including, without limitation, all vehicle types including, without limitation, atmospheric and aerospace vehicles and other objects, and structures designed for use in space or other upper-atmosphere environments such as, for example, manned or unmanned vehicles and objects. Contemplated objects include, but are not limited to vehicles such as, for example, aircraft, spacecraft, satellites, rockets, missiles, etc. and therefore include manned and unmanned aircraft, manned and unmanned spacecraft, manned and unmanned terrestrial vehicles, manned and unmanned non-terrestrial vehicles, and even manned and unmanned surface and manned and unmanned sub-surface water-borne vehicles and objects.

When introducing elements of the present disclosure or exemplary aspects thereof, the articles "a," "an," "the" and "said" are intended to mean that there are one or more of the elements. The terms "comprising," "including" and "having" are intended to be inclusive and mean that there may be additional elements other than the listed elements. Although this disclosure has been described with respect to specific aspects, the details of these aspects are not to be construed as limitations. While the preferred variations and alternatives of the present disclosure have been illustrated and described, it will be appreciated that various changes and substitutions can be made therein without departing from the scope of the claims.

## Claims

1. A method for inhibiting corrosion of a substrate comprising:

   applying a composition to a substrate, said composition comprising an extract derived from a plant comprising: *Annona crassiflora; Inga; Mangifera; Taraxacum; Plantango; Chamomilla recutita; Solidago*; or combinations thereof; and
   inhibiting corrosion of the substrate, said substrate comprising a substrate surface.

2. The method of Claim 1, wherein, in the step of applying a composition to a substrate, the composition comprises an extract derived from a plant species comprising: *Annona crassiflora; Mangifera indica; Taraxacum officinale; Plantango major; Chamomilla recutita; Solidago chilensis*; or combinations thereof.

3. The method of Claims 1 or 2, wherein in the step of applying a composition to a substrate the composition comprises an extract derived from a plant species comprising: *Annona crassiflora; Mangifera indica;* or combinations thereof.

4. The method of Claim 1, wherein, in the step of applying a composition to a substrate, the composition comprises an extract derived from a plant species comprising: *Annona crassiflora.*

5. The method of Claim 1, wherein, in the step of applying a composition to a substrate, the composition comprises an extract derived from a plant species comprising: *Inga.*

6. The method of Claim 1, wherein, in the step of applying a composition to a substrate, the composition comprises an extract derived from a plant species comprising: *Mangifera.*

7. The method of Claim 1, wherein, in the step of applying a composition to a substrate, the composition comprises an extract derived from a plant species comprising: *Taraxacum.*

8. The method of Claim 1, wherein, in the step of applying a composition to a substrate, the composition comprises an extract derived from a plant species comprising: *Plantango*.

9. The method of Claim 1, wherein, in the step of applying a composition to a substrate, the composition comprises an extract derived from a plant species comprising: *Chamomilla recutita.*

10. The method of Claim 1, wherein, in the step of applying a composition to a substrate, the composition comprises an extract derived from a plant species comprising: *Solidago.*

11. The method of any one of Claims 1-3, wherein in the step of applying a composition to a substrate, the composition comprises an extract derived from a plant species comprising: *Annona crassiflora; Mangifera indica;* or combinations thereof, and said extract is present in said composition at a concentration ranging from 5% to 20%.

12. The method of any preceding Claim, wherein in the step of applying a composition to a substrate, the substrate comprises aluminum, aluminum alloy, copper, copper alloy, or combinations thereof.

13. The method of any preceding Claim, wherein, in the step of applying a composition to a substrate, said substrate comprises aluminum alloy 2024 T3 or aluminum alloy 7075.

14. Use of a composition for inhibiting corrosion on a substrate, said composition comprising:
an extract derived from a plant comprising: *Annona crassiflora; Inga; Mangifera; Taraxacum; Plantango; Chamomilla recutita; Solidago*; or combinations thereof.

15. The use according to Claim 14, wherein the composition further comprises a primer.

**Patentansprüche**

1. Verfahren zum Inhibieren von Korrosion eines Substrats, aufweisend:

   Auftragen einer Zusammensetzung auf ein Substrat, wobei die Zusammensetzung einen von einer Pflanze gewonnenen Extrakt, aufweisend: *Annona crassiflora; Inga; Mangifera; Taraxacum; Plantango; Chamomilla recutita; Solidago* oder Kombinationen davon, aufweist und
   Inhibieren von Korrosion des Substrats, wobei das Substrat eine Substratoberfläche aufweist.

2. Verfahren nach Anspruch 1, wobei in dem Schritt des Auftragens einer Zusammensetzung auf ein Substrat die Zusammensetzung einen von einer Pflanzenart gewonnenen Extrakt, aufweisend: *Annona crassiflora; Mangifera indica; Taraxacum officinale; Plantango major; Chamomilla recutita; Solidago chilensis* oder Kombinationen davon, aufweist.

3. Verfahren nach Anspruch 1 oder 2, wobei in dem Schritt des Auftragens einer Zusammensetzung auf ein Substrat die Zusammensetzung einen von einer Pflanzenart gewonnenen Extrakt, aufweisend: *Annona crassiflora; Mangifera indica* oder Kombinationen davon, aufweist.

4. Verfahren nach Anspruch 1, wobei in dem Schritt des Auftragens einer Zusammensetzung auf ein Substrat die Zusammensetzung einen von einer Pflanzenart gewonnenen Extrakt, aufweisend: *Annona crassiflora,* aufweist.

5. Verfahren nach Anspruch 1, wobei in dem Schritt des Auftragens einer Zusammensetzung auf ein Substrat die Zusammensetzung einen von einer Pflanzenart gewonnenen Extrakt, aufweisend: *Inga,* aufweist.

6. Verfahren nach Anspruch 1, wobei in dem Schritt des Auftragens einer Zusammensetzung auf ein Substrat die Zusammensetzung einen von einer Pflanzenart gewonnenen Extrakt, aufweisend: *Mangifera,* aufweist.

7. Verfahren nach Anspruch 1, wobei in dem Schritt des Auftragens einer Zusammensetzung auf ein Substrat die Zusammensetzung einen von einer Pflanzenart gewonnenen Extrakt, aufweisend: *Taraxacum,* aufweist.

8. Verfahren nach Anspruch 1, wobei in dem Schritt des Auftragens einer Zusammensetzung auf ein Substrat die Zusammensetzung einen von einer Pflanzenart gewonnenen Extrakt, aufweisend: *Plantango,* aufweist.

9. Verfahren nach Anspruch 1, wobei in dem Schritt des Auftragens einer Zusammensetzung auf ein Substrat die Zusammensetzung einen von einer Pflanzenart gewonnenen Extrakt, aufweisend: *Chamomilla recutita,* aufweist.

10. Verfahren nach Anspruch 1, wobei in dem Schritt des Auftragens einer Zusammensetzung auf ein Substrat die Zusammensetzung einen von einer Pflanzenart gewonnenen Extrakt, aufweisend: *Solidago,* aufweist.

11. Verfahren nach einem der Ansprüche 1 bis 3, wobei in dem Schritt des Auftragens einer Zusammensetzung auf ein Substrat die Zusammensetzung einen von einer Pflanzenart gewonnenen Extrakt, aufweisend: *Annona crassiflora; Mangifera indica* oder Kombinationen davon, aufweist, und der Extrakt in der Zusammensetzung in einer Konzentration im Bereich von 5 % bis 20 % vorhanden ist.

12. Verfahren nach einem der vorhergehenden Ansprüche, wobei in dem Schritt des Auftragens einer Zusammensetzung auf ein Substrat das Substrat Aluminium, eine Aluminiumlegierung, Kupfer, eine Kupferlegierung oder Kombinationen davon aufweist.

13. Verfahren nach einem der vorhergehenden Ansprüche, wobei in dem Schritt des Auftragens einer Zusammensetzung auf ein Substrat die Zusammensetzung eine Aluminiumlegierung 2024 T3 oder Aluminiumlegierung 7075 aufweist.

14. Verwendung einer Zusammensetzung zum Inhibieren von Korrosion auf einem Substrat, wobei die Zusammensetzung Folgendes aufweist:
einen von einer Pflanze gewonnenen Extrakt, aufweisend: *Annona crassiflora; Inga; Mangifera; Taraxacum; Plantango; Chamomilla recutita; Solidago* oder Kombinationen davon.

15. Verwendung nach Anspruch 14, wobei die Zusammensetzung ferner eine Grundierung aufweist.


**Revendications**

1. Procédé pour empêcher la corrosion d'un substrat, ledit procédé comprenant le fait :

    d'appliquer une composition sur un substrat, ladite composition contenant un extrait dérivé d'une plante comprenant : *l'Annona crassiflora* ; *l'Inga* ; *le Mangifera* ; *le Taraxacum* ; *le Plantango ; la Chamomilla recutita* ; *le Solidago* ; ou des combinaisons de ces plantes ; et
    d'empêcher la corrosion du substrat, ledit substrat comprenant une surface de substrat.

2. Procédé selon la revendication 1, dans lequel, dans l'étape d'application d'une composition sur un substrat, la composition contient un extrait dérivé d'une espèce végétale comprenant : *l'Annona crassiflora ; le Mangifera indica ; le Taraxacum officinale* ; *le Plantango major* ; *la Chamomilla recutita* ; *le Solidago chilensis* ; ou des combinaisons de ces espèces végétales.

3. Procédé selon les revendications 1 ou 2, dans lequel, dans l'étape d'application d'une composition sur un substrat, la composition contient un extrait dérivé d'une espèce végétale comprenant : *l'Annona crassiflora* ; *le Mangera indica* ; ou des combinaisons de ces espèces végétales.

4. Procédé selon la revendication 1, dans lequel, dans l'étape d'application d'une composition sur un substrat, la composition contient un extrait dérivé d'une espèce végétale comprenant : *l'Annona crassiflora.*

5. Procédé selon la revendication 1, dans lequel, dans l'étape d'application d'une composition sur un substrat, la composition contient un extrait dérivé d'une espèce végétale comprenant : *l'Inga.*

6. Procédé selon la revendication 1, dans lequel, dans l'étape d'application d'une composition sur un substrat, la composition contient un extrait dérivé d'une espèce végétale comprenant : *le Mangifera.*

7. Procédé selon la revendication 1, dans lequel, dans l'étape d'application d'une composition sur un substrat, la composition contient un extrait dérivé d'une espèce végétale comprenant : *le Taraxacum.*

8. Procédé selon la revendication 1, dans lequel, dans l'étape d'application d'une composition sur un substrat, la composition contient un extrait dérivé d'une espèce végétale comprenant : *le Plantango.*

9. Procédé selon la revendication 1, dans lequel, dans l'étape d'application d'une composition sur un substrat, la composition contient un extrait dérivé d'une espèce végétale comprenant : *la Chamomilla recutita.*

10. Procédé selon la revendication 1, dans lequel, dans l'étape d'application d'une composition sur un substrat, la composition contient un extrait dérivé d'une espèce végétale comprenant : *le Solidago.*

11. Procédé selon l'une quelconque des revendications 1 à 3, dans lequel, dans l'étape d'application d'une composition sur un substrat, la composition contient un extrait dérivé d'une espèce végétale comprenant : *l'Annona crassiflora ; le Mangifera indica* ; ou des combinaisons de ces espèces végétales, et ledit extrait est présent dans ladite composition à une concentration allant de 5 % à 20 %.

12. Procédé selon l'une quelconque des revendications précédentes, dans lequel, dans l'étape d'application d'une composition sur un substrat, le substrat contient de l'aluminium, un alliage d'aluminium, du cuivre, un alliage de cuivre ou des combinaisons de ces métaux et de ces alliages.

13. Procédé selon l'une quelconque des revendications précédentes, dans lequel, dans l'étape d'application d'une composition sur un substrat, ledit substrat contient un alliage d'aluminium 2024 T3 ou un alliage d'aluminium 7075.

14. Utilisation d'une composition pour empêcher la corrosion sur un substrat, ladite composition contenant :

    un extrait dérivé d'une plante comprenant : *l'Annona crassiflora* ; *l'Inga ; le Mangifera* ; *le Taraxacum* ; *le Plantango* ; *la Chamomilla recutita* ; *le Solidago ;* ou
    des combinaisons de ces plantes.

15. Utilisation selon la revendication 14, dans laquelle la composition contient en outre un primaire.

**FIG.1**

FIG.2

FIG.3

EP 3 351 600 B1

FIG.4

FIG.5

CORRELATION % DPPH X % CIE

$Y = 0{,}9762X - 1{,}9103$
$R^2 = 0{,}8933$

FIG.6

70

PERFORMING A DIPHENYLPICCRYLHYDRAZYL
ASSAY ON A PLANT EXTRACT SAMPLE — 71

OBTAINING A DIPHENYLPICCRYLHYDRAZYL
ASSAY CORROSION INHIBITION VALUE FOR
THE PLANT EXTRACT SAMPLE — 72

OBTAINING A CORROSION INHIBITION
EFFICIENCY PERCENTAGE
FOR THE PLANT EXTRACT SAMPLE — 73

COMPARING THE DIPHENYLPICCRYLHYDRAZYL
ASSAY VALUE FOR THE PLANT
EXTRACT SAMPLE WITH THE CORROSION INHIBITION
EFFICIENCY PERCENTAGE FOR THE PLANT EXTRACT SAMPLE — 74

75

SELECTING A PLANT EXTRACT EXHIBITING BOTH A
DIPHENYLPICCRYLHYDRAZYL ASSAY VALUE GREATER
THAN ABOUT 80% AND A CORROSION INHIBITION
EFFICIENCY PERCENTAGE GREATER THAN ABOUT 80%
FOR USE IN A CORROSION INHIBITION
COATING FOR A SUBSTRATE MATERIAL.

FIG.7

80

┌─────────────────────────────────────────────┐ 81
│ PERFORMING A DIPHENYLPICCRYLHYDRAZYL          │
│ ASSAY ON A PLANT EXTRACT SAMPLE               │
└─────────────────────────────────────────────┘
                      │
┌─────────────────────────────────────────────┐ 82
│ OBTAINING A DIPHENYLPICCRYLHYDRAZYL ASSAY     │
│ CORROSION INHIBITION VALUE FOR THE PLANT EXTRACT SAMPLE │
└─────────────────────────────────────────────┘
                      │
┌─────────────────────────────────────────────┐ 86
│ PERFORMING LINEAR SWEEP VOLTAMMETRY TESTING   │
│ ON THE PLANT EXTRACT SAMPLE                   │
└─────────────────────────────────────────────┘
                      │
┌─────────────────────────────────────────────┐ 83
│ OBTAINING A CORROSION INHIBITION EFFICIENCY   │
│ PERCENTAGE FOR THE PLANT EXTRACT SAMPLE       │
└─────────────────────────────────────────────┘
                      │
┌─────────────────────────────────────────────┐ 84
│ COMPARING THE DIPHENYLPICCRYLHYDRAZYL         │
│ ASSAY VALUE FOR THE PLANT EXTRACT SAMPLE WITH │
│ THE CORROSION INHIBITION EFFICIENCY PERCENTAGE FOR │
│ THE PLANT EXTRACT SAMPLE                      │
└─────────────────────────────────────────────┘
                      │
┌─────────────────────────────────────────────┐ 85
│ SELECTING A PLANT EXTRACT EXHIBITING BOTH A   │
│ DIPHENYLPICCRYLHYDRAZYL ASSAY VALUE GREATER THAN ABOUT │
│ 80% AND A CORROSION INHIBITION EFFICIENCY PERCENTAGE GREATER │
│ THAN ABOUT 80% FOR USE IN A CORROSION INHIBITION │
│ COATING FOR A SUBSTRATE MATERIAL.             │
└─────────────────────────────────────────────┘

FIG.8

90

| EXTRACTING A PLANT EXTRACT SAMPLE | 91 |

| PERFORMING A DIPHENYLPICCRYLHYDRAZYL ASSAY ON A PLANT EXTRACT SAMPLE | 81 |

| OBTAINING A DIPHENYLPICCRYLHYDRAZYL ASSAY CORROSION INHIBITION VALUE FOR THE PLANT EXTRACT SAMPLE | 82 |

| PERFORMING LINEAR SWEEP VOLTAMMETRY TESTING ON THE PLANT EXTRACT SAMPLE | 86 |

| OBTAINING A CORROSION INHIBITION EFFICIENCY PERCENTAGE FOR THE PLANT EXTRACT SAMPLE | 83 |

| COMPARING THE DIPHENYLPICCRYLHYDRAZYL ASSAY VALUE FOR THE PLANT EXTRACT SAMPLE WITH THE CORROSION INHIBITION EFFICIENCY PERCENTAGE FOR THE PLANT EXTRACT SAMPLE | 84 |

| SELECTING A PLANT EXTRACT EXHIBITING BOTH A DIPHENYLPICCRYLHYDRAZYL ASSAY VALUE GREATER THAN ABOUT 80% AND A CORROSION INHIBITION EFFICIENCY PERCENTAGE GREATER THAN ABOUT 80% FOR USE IN A CORROSION INHIBITION COATING FOR A SUBSTRATE MATERIAL. | 85 |

FIG.9

100

TREATING PLANT SEEDS, PLANT
PEEL OR COMBINATIONS THEREOF TO OBTAIN A SAMPLE
— 101

102
ADDING A SOLVENT TO THE SAMPLE

103
OBTAINING AN EXTRACT FROM THE SOLVENT

81
PERFORMING A DIPHENYLPICCRYLHYDRAZYL
ASSAY ON A PLANT EXTRACT SAMPLE

82
OBTAINING A DIPHENYLPICCRYLHYDRAZYL ASSAY CORROSION
INHIBITION VALUE FOR THE PLANT EXTRACT SAMPLE

86
PERFORMING LINEAR SWEEP VOLTAMMETRY
TESTING ON THE PLANT EXTRACT SAMPLE

FIG.10

83
OBTAINING A CORROSION INHIBITION EFFICIENCY
PERCENTAGE FOR THE PLANT EXTRACT SAMPLE

84
COMPARING THE DIPHENYLPICCRYLHYDRAZYL ASSAY VALUE FOR
THE PLANT EXTRACT SAMPLES WITH THE CORROSION INHIBITION
EFFICIENCY PERCENTAGE FOR THE PLANT EXTRACT SAMPLE

85
SELECTING A PLANT EXTRACT EXHIBITING BOTH A
DIPHENYLPICCRYLHYDRAZYL ASSAY VALUE GREATER THAN ABOUT 80% AND A
CORROSION INHIBITION EFFICIENCY PERCENTAGE GREATER THAN ABOUT 80%
FOR USE IN A CORROSION INHIBITION COATING FOR A SUBSTRATE MATERIAL.

110

APPLYING A COMPOSITION COMPRISING A
PLANT EXTRACT TO A SUBSTRATE

112

INHIBITING CORROSION ON A SUBSTRATE

114

FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006233322 B
- CN 105385413

- JP 2004352680 B
- EP 2939657 A

**Non-patent literature cited in the description**

- **M LEBRINI et al.** Inhibition Effect of Alkaloids Extract from Annona Squamosa Plant on the Corrosion of C38 Steel in Normal Hydrochloric Acid Medium. *INT. J. ELECTROCHEM. SCI. INTERNATIONAL JOURNAL,* 01 January 2010, vol. 5, 1698-1712
- **MANAWWER ALAM et al.** Vegetable oil based eco-friendly coating materials: A review article. *ARABIAN JOURNAL OF CHEMISTRY,* 31 December 2013, vol. 7 (4), 469-479
- **J DUBEY et al.** Corrosion Inhibitive Effects of Withania Somnifera (A medicinal plant) on Aluminium in HCl Solution. *RESEARCH JOURNAL OF RECENT SCIENCES,* 01 January 2012, vol. 1 (73), 2277-2502
- Antioxidant activity of Annona crassiflora: Characterization of major components by electrospray ionization mass spectrometry. **ROESLER, R.; CATHARINO et al.** FOOD CHEMISTRY. ELSEVIER LTD, 01 January 2007, vol. 104, 1048-1054

- **ERKAN, N. ; CETIN, H. ; AYRANCI, E.** Antioxidant activities of Sideris congesta Davis et Huber-Morath and Soderitis arguta Boiss et Heldr: Identification of free flavonoids and cinnamic and derivates. *Food Research International,* 2011, vol. 44, 297-303
- **ROESLER, R. ; CATHARINO, R.R. ; MALTA, L.G. ; EBERLIN, M.N. ; PASTORE, G.** Evaluation of the Antioxidant properties of the Brazilian cerrado fruit Annona crassiflora (Araticum). *Food Chemistry,* 2007, vol. 104, 1048-1054
- **VUKMIROVIC, M. B. ; VASILJEVIC, N. ; DIMITROV, N. ; SIERADZKI, K.** Diffusion-Limited current density of oxygen reduction on Copper. *Journal of Electrochemical Society,* 2003, vol. 150, B-10-B15